# EUROPÄISCHE PATENTANMELDUNG

(11) **EP 3 647 764 A1**
(43) Veröffentlichungstag der Anmeldung: **06.05.2020**
(21) Anmeldenummer: 19201756.4
(22) Anmeldetag: 07.10.2019
(51) Int. Cl.: G01N 3/42

(54) **MESSGERÄT ZUR BESTIMMUNG VON HÄRTEWERTEN AN EINEM PROBENKÖRPER**

(30) Priorität: 16.10.2018 DE 102018125669
(71) Anmelder: BAREISS PRÜFGERÄTEBAU GMBH, 89610 Oberdischingen (DE)
(72) Erfinder: STROBEL, Peter, 89610 Oberdischingen (DE); WIRTH, Oliver, 89584 Ehingen (DE)
(74) Vertreter: Baur & Weber Patentanwälte PartG mbB

(57) **Zusammenfassung**

Es wird ein Messgerät zur Bestimmung von Härtewerten an einem Probenkörper angegeben, umfassend eine Messvorrichtung mit einem Eindringkörper mittels welchem Härtewerte eines Probenkörpers bestimmbar sind, einem Drehteller zur Aufnahme mindestens eines Probenträgers mit einer Aussparung, in die der Probenkörper einsetzbar ist, und einem Drehfinger, wobei der Probenträger eine in Umfangrichtung periodisch ausgebildete Wölbung aufweist, in die der Drehfinger bei einer Drehung des Drehtellers um die Drehtellerhochachse zur Drehung des Probenträger um die Probenträgerhochachse eingreifen kann.

## Beschreibung

Die Erfindung betrifft ein Messgerät zur Bestimmung von Härtewerten an einem Probenkörper, insbesondere mit einem Probenträger, der automatisch um einen vorbestimmten Winkel drehbar ist um Härtewerte eines Probenkörpers an mehreren vorbestimmten Stellen des Probenkörpers zu messen.

Aus dem allgemeinen Stand der Technik ist es bekannt, Messgeräte zur Bestimmung von Härtewerten elastischer Werkstoffe bereitzustellen, die mittels Eindringkörper nach standardisierten Messverfahren Härtewerte bestimmen können. Die Bestimmung von Eindringtiefen bei vorgegebenen Auflagekräften ist bspw. nach diversen Normen je nach zu prüfendem Elastomer als Shore-A oder Shore-D geläufig. Die Shore-Härte ist eine Kennzahl, die vorwiegend für Elastomere und gummielastische Polymere eingesetzt wird. Sie steht in direkter Beziehung zur Eindringtiefe eines Eindringkörpers in einen Probenkörper und ist somit ein Maß für die Werkstoffhärte. Als Eindringkörper wird typischerweise ein federbelasteter Stift, beispielsweise aus gehärtetem Stahl oder Hartmetall verwendet. Für O-Ringe oder dergleichen werden auch Messverfahren nach IRHD verwendet.

Allgemein bekannt ist es, dass Messungen bzw. die aus Messungen resultierenden Ergebnisse unter Laborbedingungen reproduzierbar sein müssen. Entsprechend einschlägiger Normen und weiterer Anforderungen an die normgerechte Durchführung von Härtemessungen, müssen beispielsweise Absenkgeschwindigkeiten beachtet werden oder bei Messungen an unterschiedlichen Stellen eines Probenkörpers bestimmten Abstände eingehalten werden, da diese unter Verwendung standardisierter Druckplatten mit einem vorgegebenen Durchmesser durchgeführt werden.

Aus der DE 93 18 389 U1 ist ein elektronisches Prüfgerät zur Bestimmung der Härte von Kautschuk, Elastomeren und Kunststoffen nach DIN 53505 (neue Norm: DIN ISO 7619), mit wenigstens einer Prüfstempeleinheit nach Shore-A und /oder Shore-D für den Shore-Härtebereich bekannt, wobei das Prüfgerät mit getrennter Prüfstempeleinheit nach Shore-A und / oder Shore-D für den Shore-Härtebereich ausgebildet und zur Gewinnung exakter und reproduzierbarer Messwerte in dem begrenzten Messbereich für den netzunabhängigen Betrieb mit wieder aufladbaren Batterien eingerichtet ist.

Bei fest in der Laboreinrichtung installierten Prüfvorrichtungen mit einem Probentisch, wie bspw. der aus der DE 197 51 377 C2 bekannt, wird der Probenkörper unterhalb des Messkopfs zur Messung an mehreren Messstellen händisch verdreht.

Aus der DE 20 2017 102 686 U1 ist ein Mehrfachmesskopf zur Bestimmung von Härtewerten an einem Probenkörper, der drei Messeinrichtungen umfasst, bekannt, die jeweils eine Druckplatte, eine die Druckplatte durchdringenden Messstange mit einem am der Spitze angeordneten Eindringkörper, einen Innenkörper und eine mit dem Innenkörper in Verbindung stehende und in axialer Richtung sich an die Messstange anschließende Feder aufweisen, wobei die Feder der ersten Messeinrichtung, der zweiten Messeinrichtung und der dritten Messeinrichtung sich an einem Außenkörper abstützen, der die Messeinrichtungen nach oben und seitlich umschließt und an seinem unteren, dem Probenkörper zugewandten Ende mit einer Anlagefläche versehen ist, um nach Kontakt der Anlagefläche mit dem Probenkörper jeweils über die Druckplatten eine vorherbestimmte Anpresskraft an den Messeinrichtungen auszuüben.

Ausgehend von diesem Stand der Technik hat sich der Erfinder nun die Aufgabe gestellt, eine Vorrichtung zur Bestimmung von Härtewerten an einem Probenkörper anzugeben, mittels der die Messung an unterschiedlichen Messstellen des Probenkörpers vereinfacht und insbesondere automatisierbar wird.

Diese Aufgabe wird durch den unabhängigen Patenanspruch 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifisiert die Erfindung zusätzlich.

Gemäß der Erfindung wird ein Messgerät zur Bestimmung von Härtewerten an einem Probenkörper angegeben, umfassend eine Messvorrichtung mit einem Eindringkörper mittels welchem Härtewerte eines Probenköpers bestimmbar sind, einem Drehteller zur Aufnahme mindestens eines Probenträgers mit einer Aussparung, in die der Probenkörper einsetzbar ist, und einem Drehfinger, wobei der Probenträger eine in Umfangrichtung periodisch ausgebildete Wölbung aufweist, in die der Drehfinger bei einer Drehung des Drehtellers um eine Drehtellerhochachse zur Drehung des Probenträgers um die Probenträgerhochachse eingreifen kann.

Demnach wird ein Messgerät angegeben, dessen Drehteller um eine senkrecht durch seinen Mittelpunkt verlaufende Drehtellerhochachse gedreht werden kann, wobei während der Drehung des Drehtellers ein außerhalb des Drehtellers angeordneter Drehfinger in eine Wölbung eines Probenträgers eingreift um den Probenträger um eine senkrecht durch seinen Mittelpunkt verlaufende Probenträgerhochachse zu drehen. Ein Probenträger wird somit bei einer vollen Umdrehung des Drehtellers um einen vorbestimmten Winkel gedreht. Der Drehteller wird dabei von einem Motor, wie beispielsweise einem mit Gleichstrom betriebenen Schrittmotor, angetrieben. Dies ermöglicht es, entlang gleichmäßig auf dem Probenkörper verteilten Messstellen eine Härtemessung durchzuführen.

Der Winkel, um den ein Probenträger bei einer vollen Umdrehung des Drehtellers bzw. während der Wechselwirkung mit dem Drehfinger gedreht wird, hängt dabei von der Anzahl der am Probenträger in Umfangrichtung periodisch ausgebildeten Wölbungen ab. Bei einer Anordnung von insgesamt sechs nach innen ragenden, sowie sechs nach außen ragenden Wölbungen, also einer Form ähnlich einem Hexagram, würde der Probenträger bei einer vollen Umdrehung des Drehtellers um den sechsten Teil von 360°, also um 60°, gedreht werden. Die am Probenträger ausgebildete und im Umfangrichtung periodisch verlaufende Struktur weist idealerweise keine Kanten auf, sodass die Übergänge zwischen nach innen ragenden Wölbungen und nach außen ragenden Wölbungen kurvenartig und stetig ausgebildet sind.

Damit der Drehfinger den Probenträger während einer Drehung des Drehtellers rotieren kann, greift dieser zunächst in eine nach innen ragende Wölbung des Probenträgers ein. Bei weiterer Drehung des Drehtellers gleitet der Drehfinger durch die nach innen ragende Wölbung, durchläuft den tiefsten Prunkt der Wölbung und wird gegen den wieder ansteigenden Teil der nach innen gerichteten Wölbung gedrückt, also gegen den zu einer nach außen ragenden Wölbung hin verlaufenden Teil einer nach innen ragenden Wölbung. Während dieses Eingreifens des Drehfingers in den wieder ansteigenden Teil einer nach innen ragenden Wölbung wird der Probenträger gedreht.

Nach dem Drehen des Probenträgers um einen gewünschten Winkel, womit ebenfalls auch der Probenkörper um einen gewünschten Winkel gedreht wurde, kann die Bestimmung eines Härtewertes mittels des Eindringkörpers an einer dann veränderten Stelle des Probenkörpers stattfinden.

Allgemein formuliert kann ein Probenkörper in einen Probenträger mit N nach innen ragenden Wölbungen durch N-maliges Verdrehen an N Messstellen bezüglich seiner Härte vermessen werden. Die N Messstellen liegen bei einem zylindrischen Probenkörper auf einem gemeinsamen Radius um die Probenträgerhochachse beziehungsweise auch um den Probenkörpermittelpunkt, wenn dieser mit der Probenträgerhochachse zusammenfällt.

Typischerweise werden zylinderscheibenförmige Probenkörper mit einer Mindesthöhe verwendet. Die Mindesthöhe ergibt sich dabei aus anzuwendenden Normen. Es sind aber auch beliebige andere Grundflächen für den Probenkörper möglich. So kann dieser beispielsweise als ein beliebiger Polyeder vorliegen, wobei gewährleistet sein sollte, dass der Eindringkörper des Messgerätes senkrecht auf den Probenkörper trifft.

Um mehrere Probenkörper gleichzeitig vermessen zu können, werden auf dem Drehteller mehrere Probenträger entlang eines gemeinsamen Umfangs auf dem Drehteller angeordnet.

In Drehrichtung des Drehtellers betrachtet wird der Drehfinger idealerweise vor der Messvorrichtung angeordnet, sodass bei Beginn einer Messung der Drehteller nicht erst soweit gedreht werden muss, dass der sich am Messgerät befindende Probenträger korrekt ausgerichtet wurde.

In wieder einer anderen Ausführung können die Messvorrichtung und der Drehfinger bezüglich des Drehtellers einander gegenüberliegend angeordnet sein.

Die auf eine Ebene reduzierte Projektion, der am Probenträger in Umfangrichtung periodisch ausgerichteten Wölbungen, kann bspw. wie eine Sinusschwingung mit gerader oder ungerader Anzahl an Halbschwingungen aussehen. Selbige Projektion könnte aber auch eine beliebige andere Kurvenform mit Maxima und Minima einnehmen, wobei lediglich die Forderung besteht, dass die Linie durchgezogen, also stetig sein muss.

In wiederum anderer Ausführung könnte eine in Umfangrichtung des Probenträgers betrachtet zwar periodische Anordnung von Wölbungen vorgesehen sein, welche jedoch nicht zwangsläufig symmetrisch bzw. radial in Umfangrichtung versetzt identisch sein müssen. So könnte bspw. auf eine nach innen gerichtete Wölbung, die nur einen kleinen Winkelbereich von der Probenträgerhochachse aus betrachtet einnimmt, eine breitere Wölbung folgend, die einen größeren Winkelbereich von der Probenträgerhochachse aus betrachtet einnimmt.

Somit könnte die Drehung des Probenträgers bei einer Umdrehung des Drehtellers nicht konstant erfolgen. Generell entspricht der Winkel, um die der Probenträger bei einer Umdrehung des Drehtellers gedreht wird, dem Winkelmaß der nach innen gerichteten Wölbung. Das Winkelmaß der nach innen gerichteten Wölbung erstreckt sich über den nach innen gewölbten Teil eines Probenträgers gemessen zwischen der höchsten Stelle der links und rechts benachbarten nach außen gerichteten Wölbungen.

Durch das Eingreifen des Drehfingers in die Wölbung des Probenträgers wird verhindert, dass der Probenträger bei einer Drehung nachdreht. Dieses nachdrehen wäre beispielsweise der Fall, wenn der Drehfinger an einem nicht kurvenförmig verlaufenden radial nach außen gerichteten Vorsprung des Probenträgers entlang laufen würde, weil die Drehung durch den Drehfinger nicht aufgrund der Kurvenform langsam abnimmt sondern der Eingriff von Drehfinger in Vorsprung abrupt endet, wobei der Probenträger noch einen zurückbleibenden Drehimpuls besäße.

Der Probenträger könnte anstelle einer Aussparung für einen Probenkörper auf der Oberseite auch mit einer entsprechend bearbeiteten Oberflächen versehen sein, die ein Verrutschen des Probenkörpers verhindert.

Um einen Probenträger bei einer Umdrehung des Drehtellers mehrfach zu drehen, können auch mehrere Drehfinger um den Drehteller angeordnet sein, die nacheinander in die Wölbung des Probenträgers eingreifen und diesen somit drehen.

Gemäß einer Ausführungsform der Erfindung ist die in Umfangrichtung periodisch ausgebildete Wölbung des Probenträgers auf der Seitenfläche des Probenträgers ausgebildet.

In der Draufsicht auf einen Probenträger weist dieser demnach eine sternförmige, bzw. auch als rosettenförmig bezeichnete Form mit Rundungen auf. Der Drehfinger würde in diesem Fall von einer Seite die senkrecht zur Probenträgerhochachse steht in die Wölbungen eingreifen.

Gemäß einer weiteren Ausführungsform der Erfindung ist die in Umfangrichtung periodisch ausgebildete Wölbung des Probenträgers auf der Unterseite des Probenträgers ausgebildet.

Somit könnte der Drehfinger auf der Unterseite des Probenträgers in die Wölbungen eingreifen. Zu diesem Zweck könnte der Drehfinger entweder von der Seite aus mittels eines abgewinkelten Bereichs unter den Probenträger eingreifen. Oder aber der Probenträger ragt mit einem Kreisabschnitt seiner Grundfläche über den Drehteller hinaus, sodass in einem Bereich außerhalb des Drehtellers der Drehfinger mit den auf der Unterseite des Probenträgers angeordneten Wölbungen in Verbindung gebracht werden kann.

Gemäß einer weiteren Ausführungsform der Erfindung sind die in Umfangrichtung periodisch ausgebildeten Wölbungen des Probenträgers auf der Oberseite des Probeträgers ausgebildet.

Demnach verlaufen die Wölbung nach innen bzw. nach außen jeweils parallel zur Probenträgerhochachse, wie dies auch bei der Anordnung der Wölbungen auf der Unterseite des Probenträgers der Fall war. Allerdings verlaufen die periodisch in Umfangrichtung angeordneten Wölbungen auf der Oberseite des Probenträgers ausschließlich in einer Kreisscheibe, weil der innen liegende um die Probenträgerhochachse angeordnete Bereich des Probenträgers zur Aufnahme des Probenkörpers vorgesehen ist.

Gemäß einer weiteren Ausführungsform der Erfindung umfasst der Drehteller mindestens eine entlang eines Umfangs zwischen der Drehtellerhochachse und der Seitenfläche des Drehtellers angeordnete Aufnahme, in die ein Probenträger eingesetzt werden kann.

Demnach sind entlang eines Umfangs mit konstantem Radius um die Drehtellerhochachse mehrere Aussparungen vorgesehen, in die ein Probenträger bzw. eine Vielzahl von Probenträger eingesetzt werden können.

Vorteilhafterweise ist die Aussparung kreisrund ausgebildet, sodass der Probenträger innerhalb der Aufnahme gedreht werden kann. Alternativ ist die Aufnahme eine bspw. mittels eines Kugellagers gebildeten Struktur auf der Oberseite des Drehtellers, in die der Probenträger eingreifen kann.

Gemäß einer weiteren Ausführungsform der Erfindung umfasst der Drehfinger einen Stift und einen Drehkopf, wobei der Drehfinger in einer Stellvorrichtung derart angeordneter ist, dass eine Federvorrichtung der Stellvorrichtung Kraft auf den Drehfinger ausübt, die in Richtung des Drehtellers weist.

Indem der Drehfinger innerhalb der Stellvorrichtung federnd gelagert ist, kann dieser beim Eingreifen des Drehfingers in eine Wölbung auf diese eine Kraft ausüben und nachdem der geringste Abstand zwischen Probenträger und Stellvorrichtung passiert wurde, wieder in die Ausgangsposition verschoben werden, d.h. in Richtung des Drehtellers weisend. Der Drehfinger bzw. die Stellvorrichtung, in der der Drehfinger angeordnet ist, kann bezüglich ihres Abstands zum Mittelpunkt des Drehtellers auch bezüglich ihres Abstands zum vorbeifahrenden Probenträger variiert werden. Demnach kann mittels des Abstandes, den die Stellvorrichtung bzw. der Drehfinger zum Drehteller hat, auch die Kraft variiert werden, mit der der Drehfinger in eine Wölbung des Probenträgers eingreift. Idealerweise wird diese Kraft so eingestellt, dass der Drehteller nicht weitergedreht wird, wenn der Drehfinger eine nach außen ragende Wölbung auf dem Probenträger passiert hat.

Gemäß einer weiteren Ausführungsform der Erfindung weist der Drehkopf des Drehfingers eine Form auf, die mit der in Umfangrichtung periodisch ausgebildeten Wölbung des Probenträgers zumindest abschnittweise formschlüssig korrespondiert.

Weisen bspw. die im Probenträger geschaffenen Wölbungen eine konstant nach innen gerichtet Krümmung auf, so könnte der Drehkopf eine entsprechende Krümmung mit gleichem Radius aufweisen. Demnach wären bei Kontakt von Wölbung und Drehkopf die beiden Bauteile entlang ihrer Kontaktfläche formschlüssig verbunden.

Alternativ könnte der Drehkopf aber auch eine nicht rotationssymmetrische Form aufweisen. Bspw. könnt der Drehkopf eine bezüglich seiner Draufsicht, also in Richtung der Probenträgerhochachse betrachtet, eine elliptische oder polygonale Form aufweisen.

Gemäß einer weiteren Ausführungsform ist der Drehkopf als drehbare Zylinderscheibe ausgebildet.

Gemäß einer weiteren Ausführungsform der Erfindung weist der als drehbare Zylinderscheibe ausgebildete Drehkopf einen kleineren Radius auf, als der kleinste Radius der in Umfangrichtung periodisch ausgebildeten Wölbungen des Probenträgers.

Im Falle eines sinusförmigen Verlaufs der periodischen und in Umfangrichtung angeordneten Wölbungen um den Probenträger liegt der geringste Kurvenradius dieser Wölbungen jeweils im Mittelpunkt einer nach innen gerichteten Wölbung und im Mittelpunkt einer nach außen gerichteten Wölbung. Führt man den Drehkopf nun mit einem kleineren Radius aus als der kleinste Radius einer nach innen gerichteten Wölbung, so berühren sich Probenträger und Drehkopf stets nur in einen einzigen Punkt. Wäre hingegen der Drehkopf mit einem größeren Radius versehen, so gäbe es einen Bereich innerhalb einer nach innen gerichteten Wölbung, in dem der Drehkopf den Probenträger an zwei Punkten berühren würde. Damit jedoch der Drehkopf eine Rollbedingung entlang der Wölbung erfüllt, muss der Drehkopf einen kleineren Radius aufweisen als die Wölbung selbst.

Gemäß einer weiteren Ausführungsform der Erfindung ist der Drehkopf aus einer Auswahl unterschiedlicher Drehköpfe auswählbar, wobei die Drehköpfe sich bezüglich ihrer Form und/oder ihrer Durchmesser und/oder ihrer Materialien unterscheiden können.

Die Form eines Drehkopfes kann von seiner Draufsicht ausgehend beispielsweise kreisrund, elliptisch oder polygonal sein. Der Durchmesser wird typischerweise kleiner oder gleich dem geringsten Wölbungsradius der Wölbung des Probenträgers gewählt. Als Materialien eignen sich insbesondere Metalle und Kunststoffe, wobei sich Materialien anbieten, die gegenüber dem Material des Probenträgers eine große Gleit- oder Rollreibung ermöglichen.

Gemäß einer weiteren Ausführungsform der Erfindung kann der Probenträger aus einer Auswahl unterschiedlicher Probenträger ausgewählt werden, wobei die Probenträger sich bezüglich ihrer in Umfangrichtung periodisch ausgebildeten Wölbung des Probenträgers und/ oder der Aussparung für der Probenkörper und/ oder des Materials unterscheiden können.

Generell können der Drehfinger bzw. der Drehkopf und der Probenträger bezüglich ihrer Form aufeinander abgestimmt werden.

Beispielsweise kann es sein, dass manche Probenkörper an drei Stellen vermessen werden müssen, wohingegen andere Probenköper an sieben Messstellen bezüglich ihrer Härte vermessen werden müssen. Im erstgenannten Fall würde der Bediener einen Probenträger auswählen, der insgesamt drei nach innen gerichtete Wölbungen aufweist, im zweiten Fall einen Probenträger mit insgesamt sieben nach innen gerichteten Wölbungen. Alternativ könnte der Drehteller nach einer durchgeführten Messung auch so oft um 360° gedreht werden, dass eine bestimmte und gewünschte Anzahl an Messstellen auf dem Probenköper berücksichtigt werden. So könnte ein Probenköper innerhalb eines Probenträgers mit sechs nach innen gerichteten Wölbungen dadurch an nur drei Messstellen vermessen werden, das zwischen zwei durchgeführten Messung der Probenträger um insgesamt 720° gedreht wird.

Gemäß einer weiteren Ausführungsform der Erfindung umfasst das Messgerät eine Steuer- und Recheneinheit, die geeignet ist, Steuerbefehle zur Durchführung einer Drehung an den Drehteller abzugeben und die geeignet ist Härtewerte von Probenkörpern zu speichern und auszugeben.

Demnach können durch eine Steuer- und Recheneinheit die gewünschte Messzyklen durchgeführt werden, indem dem Drehteller nach jeweils einer durchgeführten Messung der Härte an einem Probenkörper Befehle zum Durchführen einer Drehung um einen definierten Winkel gegeben werden. Üblicherweise ergibt sich dieser Winkel aus dem Bruchteil von 360° geteilt durch die Anzahl an Aufnahmen für Probenträger auf dem Drehteller.

Messergebnisse der Härtemessung können in der Steuer- und Recheneinheit gespeichert werden und entweder über eine Datenübertragung an einen Rechner oder über eine optische Anzeige bspw. mittels eines Anzeigegerätes ausgegeben werden.

Der Drehteller wird vorteilhafter weise über einen Schrittmotor gedreht.

Gemäß einer weiteren Ausführungsform der Erfindung ist der Probenträger mit einem für die Steuer- und Recheneinheit lesbaren Identifikationsmerkmal versehen.

Ein derartiges Identifikationsmerkmal könnte entweder ein optisch lesbarer Strichcode oder QR-Code, ein RFID-Chip oder eine bekannte und normierte Stellung des Drehtellers gegenüber dem Messgerät sein, die über den Motor zurückgegeben wird. Ein Identifikationsmerkmal ist insbesondere dann sinnvoll und vorteilhaft, wenn man die Härte von unterschiedlichen Materialien testen möchte und später nachvollziehen möchte, welches Material bei einem einzelnen Durchgang gemessen wurde.

Neben dem erfindungsgemäßen Messgerät zur Bestimmung von Härtewerten an einem Probenkörper sowie den jeweiligen Ausführungsformen wird auch ein Verfahren zum Bestimmen von Härtewerten an einem Probenkörper mittels eines Messgeräts zur Bestimmung von Härtewerten angegeben, umfassend die folgenden Schritte. Zunächst wird ein Probenkörper bereitgestellt, entsprechend dem Probenkörper wird ein Probenträger mit einer der Anzahl an gewünschten Messstellen entsprechenden Anzahl an nach innen weißenden Wölbungen ausgewählt. Daraufhin wird der Probenkörper im Probenträger angeordnet, der Probenträger auf dem Drehteller angeordnet, woraufhin eine erste Messung durchgeführt wird und zuletzt der Drehteller um einen Winkel gedreht wird, sodass der Probenträger beim Zusammenwirken mit einem Drehfinger um eine in Umfangrichtung periodisch ausgebildete Wölbung des Probenträgers entsprechenden Gradzahl gedreht wird.

Gemäß einer weiteren Ausführungsform des Verfahrens wird der Drehteller nach dem Anordnen der Probenträger auf dem Drehteller um einen bestimmten Winkel gedreht um die Probenträger vor der Durchführung einer Messung zur Bestimmung von Härtewerten auszurichten.

Erfindungsgemäß umfasst die Messvorrichtung zur Härtebestimmung eine Drehvorrichtung mit einem Drehfinger und Probeträgern mit nach innen gerichteten periodisch in Umfangrichtung angeordneten Wölbungen, die ein automatisches Drehen des Probenträgers bei einer Drehung eines Drehteller ermöglichen. Damit aber alle Probenträger vor Beginn der Messung auf eine gegenüber dem Drehteller einheitliche Lage gedreht werden, kann der Drehteller vor Beginn der Messung bspw. um eine volle Umdrehung gedreht werden. Während dieser vollen Umdrehung dieses Drehtellers würden alle auf dem Drehteller angeordneten Probenträger mindestens einmal am Drehfinger vorbeilaufen und durch diesen ausgerichtet werden.

Nachfolgend werden einige Ausführungsbeispiele anhand der Zeichnung näher erläutert. Es zeigen:
- Fig. 1: ein erfindungsgemäßes Messgerät in einer perspektivischen Ansicht,
- Fig. 2: ein erfindungsgemäßes Messgerät in einer Draufsicht der Oberseite,
- Fig. 3: einen erfindungsgemäßen Probenträger in einer Draufsicht der Oberseite und einer teilweise geschnittenen Darstellung,
- Fig. 4: eine erfindungsgemäße Stellvorrichtung in einer teilweise geschnittenen Seitenansicht und einer teilweise geschnittenen Draufsicht von oben,
- Fig. 5: ein erfindungsgemäßes Messgerät in einer perspektivischen Ansicht.

In den Figuren sind gleiche oder funktionale gleich wirkende Bauteile mit den gleichen Bezugszeichen versehen.

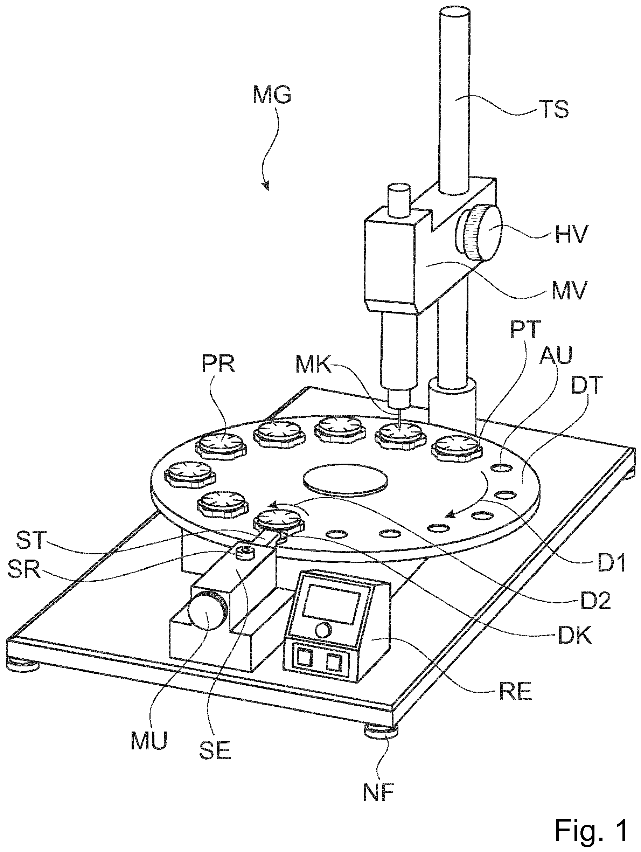

In Fig. 1 ist eine perspektivische Ansicht des erfindungsgemäßen Messgerätes MG mit einem Drehteller DT, einer Messvorrichtung MV, einem Probenträger PT und einem Drehfinger (DK, ST) gezeigt. Der Drehteller DT kann entsprechend von Steuerbefehlen einer Steuer- und Recheneinheit RE eine Drehung vollziehen. Diese Drehung verläuft in Fig.1 in der Richtung D1. Während des Drehens des Drehtellers DT in Richtung D1 werden die Probenträger PT am Drehfinger (ST, DK) vorbeigeführt. Während des Vorbeiführens greift der Drehfinger (ST, DK) in Wölbungen ein, die in Umfangrichtung periodisch um den Probenträger herum ausgebildet sind, sodass jeweils ein Probenträger PT während der Interaktion mit dem Drehfinger (ST, DK) in Richtung D2, also im Gegenuhrzeigersinn gedreht wird. Das Zusammenwirken zwischen dem Drehfinger (ST, DK) und dem Probenträger PT erfolgt dabei so, dass der Probenträger um eine vorbestimmte Winkel gedreht wird, dies ermöglicht es den Probenkörper PR an einer vorbestimmten Stelle hinsichtlich seines Härtewertes zu vermessen.

Die Messung des Härtewertes findet mit der in der Fig. 1 dargestellten Messvorrichtung MV mittels des Eindringkörpers MK statt. Die Messvorrichtung MV, an deren Unterseite der Eindringkörper MK angeordnet ist, kann über eine Höhenverstellung HV entlang eines Trägerstabes TS bezüglich der Höhe verstellt werden. Das gesamte Messgerät MG ist wie in Fig. 1 gezeigt auf einer Platte angeordnet, an deren Unterseite Nivellierfüße NF vorgesehen sind, sodass die Platte auf der das Messgerät angeordnet ist exakt horizontal ausgerichtet werden kann.

Die Drehung des Drehtellers DT findet um eine seinen Mittelpunkt durchdringende und bezüglich seiner Fläche normal nach oben weisende Drehachse statt. Diese Drehtellerhochachse verläuft parallel zu einer durch den Mittelpunkt eines jeden Probenträgers verlaufenden Probenträgerhochachse.

Die Probenträger PT sind auf dem Drehteller DT verrutschsicher und drehbar innerhalb von Aufnahmen AU angeordnet.

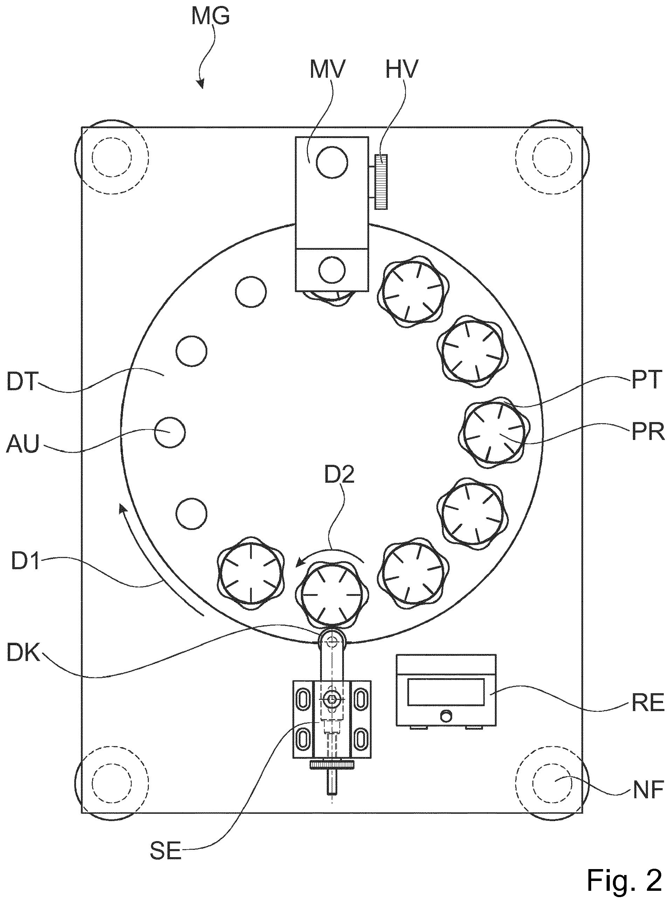

In Fig. 2 ist das Messgerät aus Fig. 1 in einer Draufsicht von oben gezeigt. Anhand von Fig. 2 soll die Funktionsweise des erfindungsgemäßen Messgerätes zur Bestimmung von Härtewerten an einem Probenkörper nochmals detaillierter erläutert werden. Der Drehteller DT wird durch einen nicht gezeigten Motor, der seine Steuerbefehle von einer Steuer- und Recheneinheit RE erhält, bspw. im Uhrzeigersinn in Drehrichtung D1 rotiert. Während dieser Rotation fahren die Probenträger PT, die in Umfangrichtung innerhalb von Aufnahmen AU auf dem Drehteller DT angeordnet sind, an einem Drehfinger (DK, ST) vorbei. Ein Drehkopf DK dieses Drehfingers greift während des Vorbeifahrens des Probenträgers PT in nach innen gerichtete Wölbungen des Probenträgers ein und bewirkt somit eine Drehung des Probenträgers im Gegenuhrzeigersinn also in Drehrichtung D2.

In der in Fig. 2 dargestellten Situation wurden zunächst Probenkörper PR bereitgestellt und in Probenträger PT eingesetzt, woraufhin die Probenträger PT innerhalb von Aufnahmen AU auf den Drehteller DT angeordnet wurden. Anschließend wurde ein initialer Durchlauf gestartet, bei dem zunächst alle Probenträger PT durch den Drehfinger ausgerichtet werden. Der links neben dem Drehfinger liegenden Probenträger PT wurde bereits ausgerichtet, der direkt am Drehfinger anliegende Probenträger PT wird gerade ausgerichtet und die nachfolgenden Probenträger PT werden bei weiterer Drehung des Drehteller DT in Drehrichtung D1 noch ausgerichtet werden. Nach diesem initialen Lauf werden die Probenträger bis unter die Messvorrichtung MV gefahren, sodass ein wie in Fig. 1 gezeigter Eindringkörper MK einen Härtewert durch Eindringen in den Probenkörper PR bestimmen kann.

Während des Eindringens des Eindringkörpers MK in den Probenkörper PR wird die Drehung des Drehtellers DT kurzzeitig unterbrochen. Eine nicht dargestellte Leseeinheit kann auf den Probenträgern PT oder auf den Probenkörpern PR angebrachte eindeutige Identifikationsmerkmale erkennen und somit beim Speichern des gemessenen Härtewertes in einer Datenbank der Steuer- und Recheneinheit Härtemesswerte eindeutig einer Probe zuordnen.

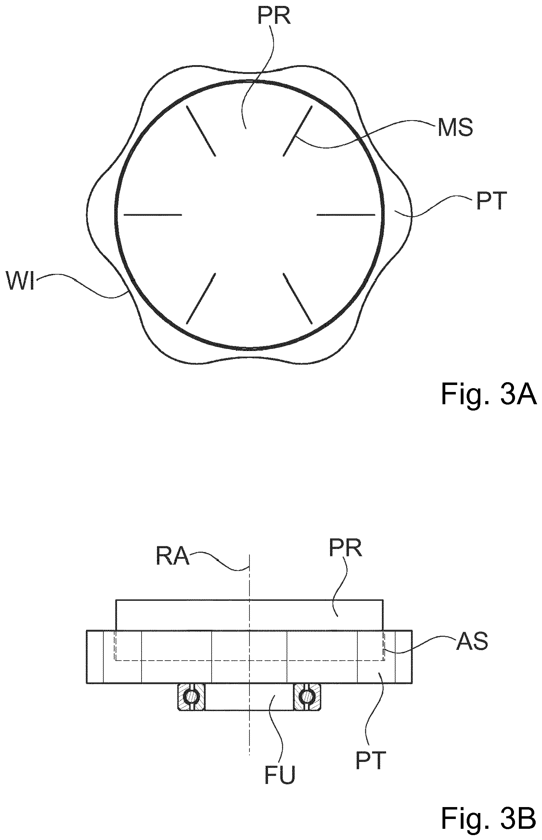

In Fig. 3A wird der Probenträger PT aus den Fig. 1 und 2 in einer vergrößerten Ansicht von oben dargestellt. Der Probenträger PT besitzt eine in Umfangrichtung periodisch ausgebildeten Wölbung mit insgesamt sechs nach innen, also zur Probenträgerhochachse RA weisenden Wölbungen WI. Die Anzahl von insgesamt sechs nach innen gerichteten Wölbung WI entspricht der Anzahl an möglichen Drehungen, bis eine volle Drehung um 360° durchgeführt wurde. Demnach ergeben sich bei sechs nach innen gerichteten Wölbungen WI auch sechs auf dem Probenkörper PR angeordneten Messstellen MS. Da entsprechend einschlägiger Normen ein Mindestabstand zwischen einem Messpunkt, an dem eine Härtemessung durchgeführt wird, und dem Außenrand des Probenkörpers PR gefordert wird, kann die in Fig. 1 und 2 gezeigte Messvorrichtung MV zu Drehtellerhochachse hin verschoben werden. Durch diese Verschiebung ergibt sich der als Strich dargestellte Bereich einer Messstelle MS in Fig. 3A.

In Fig. 3B ist der Probenträger PT aus Fig. 3A in einer teilweise geschnittenen Ansicht von der Seite gezeigt. Der Probenkörper PR ist in eine Aussparung AS auf der Oberseite des Probenträgers PT eingebracht. Auf der Unterseite des Probenträgers PT ist ein zylinderförmiger Fuß FU, mittels welchem der Probenträger PT verrutsch sicher, drehbar und gelagert in die in Fig. 1 und Fig. 2 gezeigte Aufnahme AU des Drehtellers DT eingebracht werden kann. Zur Lagerung kann beispielsweise ein wie in Fig. 3B dargestelltes Kugellager, das um den Fuß FU ausgebildet ist, vorgesehen sein.

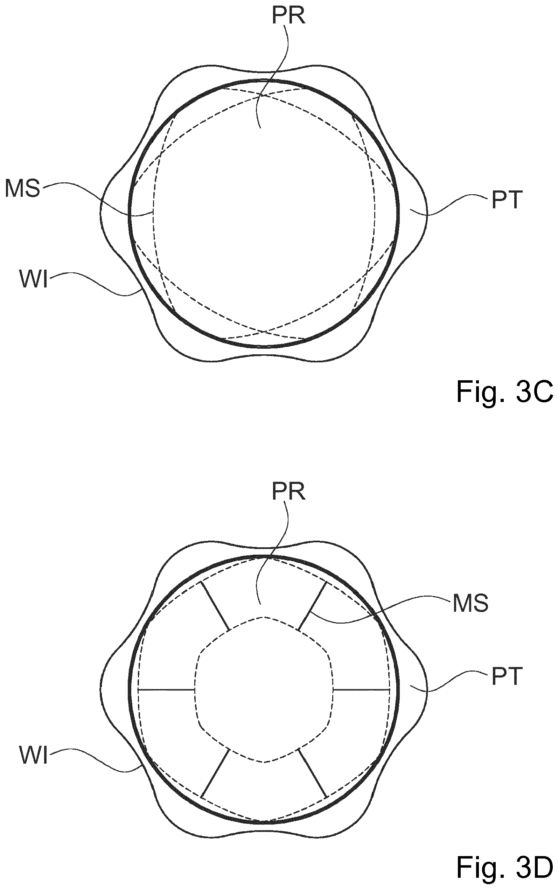

Wie Fig. 3C zeigt, können bei ausreichend großen Probenkörpern PR anstelle nur eine Messung pro nach innen gerichteter Wölbung durchzuführen auch eine Reihe beanstandeter Messungen entlang eines Kreisbogens durchgeführt werden, wobei der Mittelpunkt des Kreisbogens mit der Drehtellerhochachse zusammenfällt. Demnach würde der Probenträger PT zwar pro Umdrehung des einmalig um einen vorbestimmten Winkel gedreht, entlang der in Fig. 3C eingezeichneten Bögen können aber dennoch pro Umdrehung des Drehtellers mehrere Messungen durchgeführt werden.

Wie Fig. 3D zeigt, bildet sich zwischen einem geringsten Radius und einem größten Radius, deren Differenz der maximalen zur Drehtellerhochachse gewandten Verschiebung der Messvorrichtung entspricht, ein Bereich aus, in dem Messungen der Härte mittels der Messvorrichtung MV durchgeführt werden können. Wie unter Bezugnahme auf Fig. 3C erläutert, können pro Umdrehung des Drehtellers, also pro Winkelstellung des Probenträgers mehrere Messungen durchgeführt werden.

Damit auch die Messung entlang von Kreisbögen wie in den Fig. 3C und 3D reversibel erfolgt, kann die Messvorrichtung MV in Abhängigkeit der Drehung des Drehtellers DT zu vorgegebenen Drehwinkeln des Drehtellers DT Messungen durchführen. Sind Drehfinger und Messvorrichtung beispielsweise 180° versetzt, so könnten nach 170°, 180° und nach 190° Drehung des Drehtellers um die Drehtellerhochachse Messungen erfolgen.

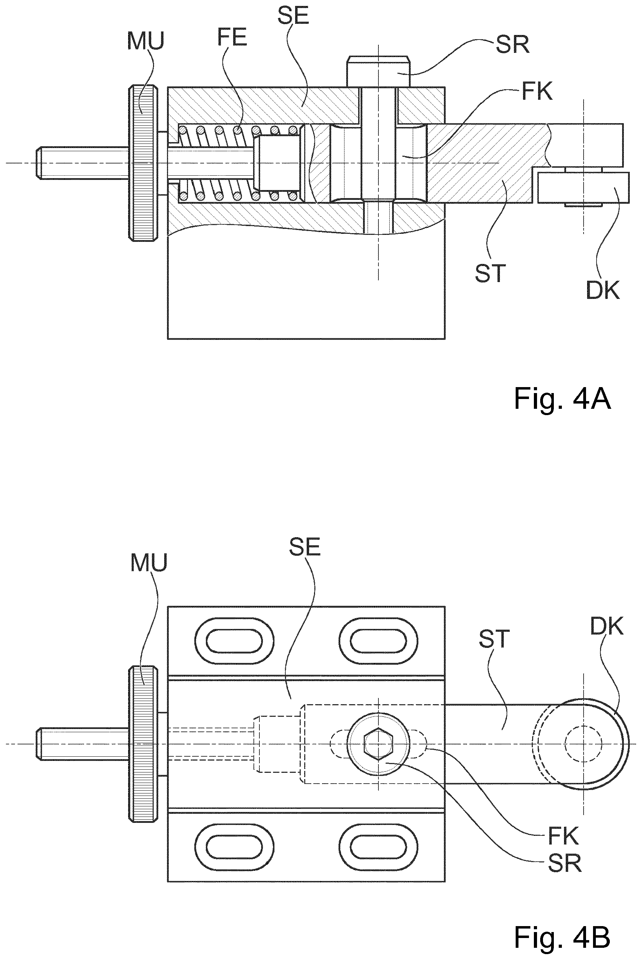

In Fig. 4A ist eine Stellvorrichtung SE mit einem Drehfinger (ST, DK) der einen Stift ST und einen Drehkopf DK umfasst gezeigt. Der Drehfinger (ST, DK) ist innerhalb der Stellvorrichtung SE gegen eine Feder FE verspannt, sodass der Drehfinger (ST, DK) mittels einer Federkraft der Feder FE aus der Stellvorrichtung SE herausgedrückt wird. Damit der idealerweise radialsymmetrische Drehfinger (ST, DK) nicht verdreht wird, ist entlang des Drehfingers ein wie in Fig.4B dargestellter Führungskanal FK vorgesehen, entlang dessen der Drehfinger (ST, DK) mittels einer den Führungskanals FK durchdringenden Schraube SR geführt wird. Zur Variation der Federkraft bzw. zum Einstellen der Länger mit der der Drehfinger (ST, DK) aus der Stellvorrichtung SE heraus ragt ist auf einem aus der Stellvorrichtung SE herausragenden Fortsatz des Stiftes ST eine Mutter MU angeordnet. Diese Mutter MU greift in ein Gewinde auf dem Stift ST ein, sodass dieser entgegen der Federkraft der Feder FE weiter in die Stellvorrichtung SE eingezogen werden kann oder der Drehfinger (ST, DK) weiter aus der Stellvorrichtung ST herausragt.

In Fig. 4B ist die Stellvorrichtung SE aus Fig. 4A in einer Draufsicht gezeigt. Wie Fig. 4B zu entnehmen ist, ist der Führungskanal so geschaffen, dass der Drehfinger (ST, DK) nicht entlang seiner Längsachse gedreht werden kann. Der Drehkopf DK ist am Stift ST drehbar gelagert und weist typischerweise einen kleineren Radius auf als die in Fig. 3A gezeigt nach innen ragende Wölbung WI.

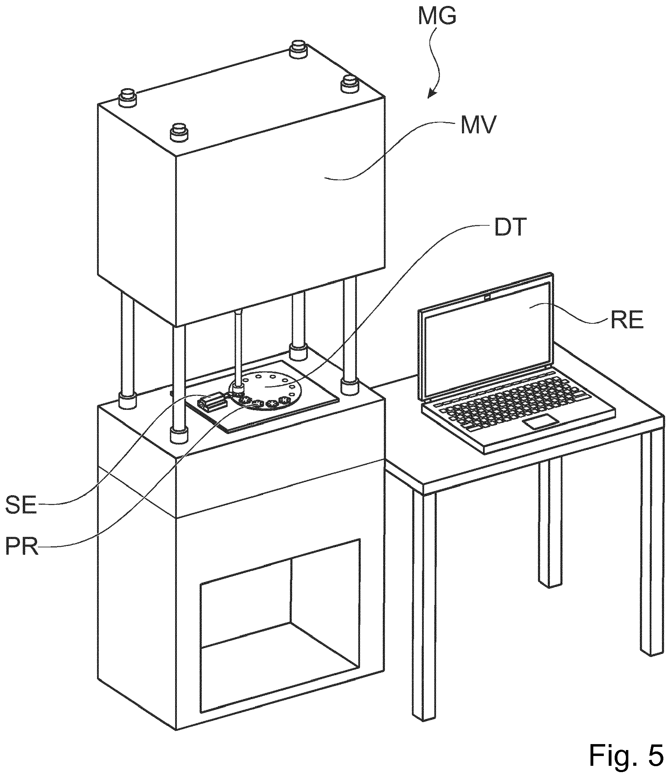

Fig. 5 zeigt ein fest in eine Laboreinrichtung integriertes Messgerät MG mit einer Messvorrichtung MV einem Drehteller DT einer Stellvorrichtung SE einer Steuer- und Recheneinheit RE zur Härtebestimmung an Probenkörper PR. Von der Messvorrichtung MV ausgehend ragt eine Auflasteinrichtung mit einem Eindringkörper auf einen Probenkörper, um dessen Härte zu bestimmen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Messgerät zur Bestimmung von Härtewerten an einem Probenkörper umfassend eine Messvorrichtung mit einem Eindringkörper mittels welchem Härtewerte eines Probenkörpers bestimmbar sind, einem Drehteller zur Aufnahme mindestens eines Probenträgers mit einer Aussparung, in die der Probenkörper einsetzbar ist, und einem Drehfinger, wobei der Probenträger eine in Umfangrichtung periodisch ausgebildete Wölbung aufweist, in die der Drehfinger bei einer Drehung des Drehtellers um die Drehtellerhochachse zur Drehung des Probenträger um die Probenträgerhochachse eingreifen kann.

2. Messgerät nach Anspruch 1, bei dem die in Umfangrichtung periodisch ausgebildete Wölbung des Probenträgers auf der Seitenfläche des Probenträgers ausgebildet ist.

3. Messgerät nach Anspruch 1 oder 2, bei dem die in Umfangrichtung periodisch ausgebildete Wölbung des Probenträgers auf der Unterseite des Probenträgers ausgebildet ist.

4. Messgerät nach einem der Ansprüche 1 bis 3, bei dem die in Umfangrichtung periodisch ausgebildete Wölbung des Probenträgers auf der Oberseite des Probenträgers ausgebildet ist.

5. Messgerät nach einem der Ansprüche 1 bis 4, bei dem der Drehteller mindestens eine entlang eines Umfangs zwischen der Drehtellerhochachse und der Seitenfläche des Drehtellers angeordnete Aufnahme umfasst, in die ein Probenträger eingesetzt werden kann.

6. Messgerät nach einem der Ansprüche 1 bis 5, bei dem der Drehfinger einen Stift und einen Drehkopf umfasst, wobei der Drehfinger in einer Stellvorrichtung derart angeordnet ist, dass eine Federvorrichtung der Stellvorrichtung eine Kraft auf den Drehfinger ausübt, die in Richtung des Drehtellers weist.

7. Messgerät nach Anspruch 6, bei dem der Drehkopf eine Form aufweist, die mit der in Umfangrichtung periodisch ausgebildeten Wölbung des Probenträgers zumindest abschnittsweise formschlüssig korrespondiert.

8. Messgerät nach Anspruch 6, bei dem der Drehkopf als drehbare Zylinderscheibe ausgebildet ist.

9. Messgerät nach Anspruch 8, bei dem der als drehbare Zylinderscheibe ausgebildete Drehknopf einen kleineren Radius aufweist als der kleinste Radius der in Umfangrichtung periodisch ausgebildeten Wölbung des Probenträgers.

10. Messgerät nach einem der Ansprüche 6 bis 9, bei dem der Drehkopf aus einer Auswahl unterschiedlicher Drehköpfe auswählbar ist, wobei die Drehköpfe sich bezüglich ihrer Form und/oder ihrer Durchmesser und/ oder ihrer Materialien unterscheiden können.

11. Messgerät nach einem der Ansprüche 1 bis 10, bei dem der Probenträger aus einer Auswahl unterschiedlicher Probenträger auswählbar ist, wobei die Probenträger sich bezüglich der in Umfangrichtung periodisch ausgebildeten Wölbung des Probenträgers und/ oder der Aussparung für der Probenkörper und/ oder des Materials unterscheiden können.

12. Messgerät nach einem der Ansprüche 1 bis 11, welches eine Steuer- und Recheneinheit umfasst, die geeignet ist Steuerbefehle zur Durchführung einer Drehung an den Drehteller abzugeben und die geeignet ist Härtewerte von Probenkörper zu speichern und auszugeben.

13. Messgerät nach Anspruch 12, dessen Probenträger mit einem durch die Steuer- und Recheneinheit lesbaren Identifikationsmerkmal versehen sind.

14. Verfahren zum Bestimmen von Härtewerten an einem Probenkörper mittels eines Messgeräts nach einem der Ansprüche 1 bis 13, umfassend die folgenden Schritte:
- Bereitstellen eines Probenkörpers,
- Auswählen eines Probenträgers entsprechend dem Probenkörper und der Anzahl an gewünschten Messstellen,
- Anordnen des Probenkörpers auf dem Probenträger,
- Anordnen des Probenträgers auf dem Drehteller,
- Durchführen einer Messung zur Bestimmung von Härtewerten an einer vorbestimmten Anzahl an Messstellen, und
- Drehen des Drehtellers um einen Winkel, sodass der Probenträger beim Zusammenwirken mit einem Drehfinger um einen der in Umfangrichtung periodisch ausgebildeten Wölbung des Probenträgers entsprechenden Gradzahl gedreht wird.

15. Verfahren nach Anspruch 14, bei dem der Drehteller nach dem Anordnen des Probenträgers auf dem Drehteller um einen bestimmten Winkel gedreht wird, um die Probenträger vor der Durchführung einer Messung zur Bestimmung von Härtewerten auszurichten.
